# EUROPEAN PATENT APPLICATION

(11) **EP 1 906 259 A2**
(43) Date of publication of application: **02.04.2008**
(21) Application number: 07108656.5
(22) Date of filing: 22.05.2007
(51) Int. Cl.: G03G 9/08, G03G 9/087

(54) **Method of preparing latex for toner composition and method of preparing toner composition using the same**

(30) Priority: 26.09.2006 KR 20060093511
(71) Applicant: Samsung Electronics Co., Ltd., Suwon-si 442-742 Gyeonggi-do (KR)
(72) Inventor: Hong, Chang-kook, Suwon-si Gyeonggi-do (KR); Lee, Jeung-won, Gangnam-gu Seoul (KR); Yon, Kyung-yol 508-1104, Hyojachon Samhwan Apt., 301, Gyeonggi-do (KR); Cheong, Min-young, Geumcheon Seoul (KR); Shim, Sang-eun, Namdong-gu Incheon (KR)
(74) Representative: Moy, David

(57) **Abstract**

A method of preparing a latex for a toner composition and a method of preparing a toner composition using the same. The method of preparing a latex for a toner composition includes preparing a monomer solution by dissolving a polyester-based monomer in an organic solvent and adding a vinyl-based monomer thereto, preparing an aqueous macromonomer solution by dissolving a macromonomer in water, preparing a solution in which monomers and macromonomer are emulsified by mixing the monomer solution and the aqueous macromonomer solution, and polymerizing the monomers by adding a hydrophilic polymerization initiator to the emulsified solution.

## Description

The present general inventive concept relates to a method of preparing a latex for a toner composition and a method of preparing a toner composition using the same. More particularly, the present general inventive concept relates to a method of preparing a latex for a toner composition and a method of preparing a toner composition using the same, in which a toner composition can be prepared which has a high gloss, an excellent durability, a low-temperature fixing property, and a controllability of a structure and a size of toner particles using simpler and more environmentally friendly processes.

Toners are a kind of recording material used in image forming apparatuses in order to form an image on a recording medium. Toners are divided into monochrome toners to form a monochromatic image and full color toners to form a color image.

Various conventional toner preparation methods are known for preparing a composition comprising a toner, but briefly, toners are generally prepared by mixing a binder resin, a colorant, and a wax, to form a mixture, followed by pulverizing the mixture, and classifying the toner particles according to the particle size. The details pertaining to the conventional toner preparation method are described in detail below:
1) Kneading or extruding: kneading the mixture comprising a binder resin, a colorant, and a wax
2) Fine grinding or pulverizing
3) Classifying: separating according to the particle size
4) Processing with an external additive: adding an external additive to the toner particles in order to provide fluidity of toner particles and charge stability

If toner particles are prepared which are suitable for image formation using an electrophotographic method or an electrostatic latent image record method, it is difficult to precisely control the size and geometric size distribution of the toner particles, and only the toner shape can be controlled in a conventional pulverizing process. Additionally, if a toner particle having a small particle size (approximately 5 µm to approximately 8 µm) is prepared, the yield of the prepared toner is remarkably reduced by the classifying process. In other words, it is necessary to classify pulverized particles in order to adjust the size of toner particles, but if toner particles having a small particle size are classified, the yield of the toner particle is remarkably reduced and it is difficult to control the toner shape.

Accordingly, a toner prepared according to the above-described conventional method has limitations regarding a modification and control of the toner structure in order to increase fixing properties, such as low-temperature fixing or temporary fixing.

To overcome the above problems, a method for preparing a polymerized toner by a suspension or an emulsion/flocculation technique is provided. In the case of preparing a polymerized toner, toner particles having a desired size can be obtained without the classifying process necessary for a pulverizing toner preparation process, and the particle shape can be freely controlled to readily obtain a toner with a narrow geometric size distribution.

An emulsion polymerization technique has been widely used as a method usable for preparing particles with a uniform geometric size distribution. Generally, the emulsion polymerization technique is performed in an aqueous phase to polymerize a latex using a hydrophobic monomer, which is insoluble in water, and a hydrophilic polymerization initiator, and to prepare particles. According to the emulsion polymerization technique, the size and shape of the toner particles may be easily controlled, and toner particles may have a high transcriptional efficiency when forming an image.

When a toner is prepared using the polymerization technique, monomers usable as polymerization monomers, such as styrene monomers, may be generally used, but polyester-based monomers may not be used frequently. This is because it is difficult to dissolve polyester-based monomers in a solvent and to polymerize polyester-based monomers in a solution, even though polyester-based monomers have an effect capable of providing a high gloss and a high particle uniformity to the polymerized toner. Therefore, polyester-based monomers are mainly used for pulverizing the toner.

Accordingly, this emulsion/flocculation technique is used to prepare a toner with superior qualities when compared to a toner prepared using the pulverization technique. However, the emulsion/flocculation technique has the problem that processes are complicated, it is difficult to remove a surfactant used as an emulsifier, and the remaining surfactant generates additional problems. Also, it is not easy to use polyester-based monomers, even though they have excellent characteristics as a raw material of the toner, for the reasons described above.

In order to more efficiently perform the method of preparing a toner by the emulsion/flocculation technique, a method is required which improves the use of an emulsifier and is capable of effectively using a polyester-based monomer exhibiting excellent characteristics during toner preparation.

Suitably, an aim of the present invention is to provide a method of preparing a latex for a toner composition, and a method of preparing a toner composition, typically featuring (a) good and/or useful and/or beneficial propert(y)ies, and/or preferably addressing at least one or some of the problems noted above, elsewhere herein, or in the art.

Suitably, a further aim of the present invention is to provide an alternative method of preparing a latex for a toner composition, and method of preparing a toner composition, to those already known.

Suitably, a further aim of the present invention or embodiments thereof is to provide a method of preparing a latex for a toner composition, and a method of preparing a toner composition, with a desirable property or properties.

A further and preferred aim of embodiments of the invention is to provide an improved method of preparing a latex for a toner composition, and method of preparing a toner composition, preferably with certain advantageous properties.

A further preferred aim of the present invention or embodiments thereof is to provide a method of preparing a latex for a toner composition, and a method of preparing a toner composition, having an improved property or improved properties compared to those of the prior art.

Other aims and/or advantages of the invention will be set forth in part in the description herein and, in part, will be obvious from the description, or may be learned by practice of the invention.

According to the present invention there is provided a method of preparing a latex for a toner composition, and a method of preparing a toner composition, as set forth in the appended claims. Preferred features of the invention will be apparent from the dependent claims, and the description which follows.

The present general inventive concept provides a method of preparing a latex for a toner composition and a method of preparing a toner composition using the same, in which a toner composition can be prepared which has a high gloss, an excellent durability, a low-temperature fixing property, and a controllability of the structure and size of toner particles using simpler and more environmentally friendly processes, because the latex for the toner composition, having advantages of a polyester-based monomer and a vinyl-based monomer, can be prepared by emulsion polymerization without using a conventional emulsifier.

Additional aspects and utilities of the present general inventive concept will be set forth in part in the description which follows and, in part, will be obvious from the description, or may be learned by practice of the general inventive concept.

The foregoing and other aspects and utilities of the general inventive concept are achieved by providing a method of preparing a latex for a toner composition, the method including preparing a monomer solution by dissolving a polyester-based monomer in an organic solvent and adding a vinyl-based monomer thereto, preparing an aqueous macromonomer solution by dissolving a macromonomer in water, preparing a solution in which the monomers and macromonomer are emulsified by mixing the monomer solution and the aqueous macromonomer solution, and polymerizing the monomers by adding a hydrophilic polymerization initiator to the emulsified solution.

Thus, in a first aspect of the present invention there is provided a method of preparing a latex for a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
preparing a solution in which the monomers and macromonomer are emulsified by mixing the monomer solution and the aqueous macromonomer solution; and
polymerizing the monomers by adding a hydrophilic polymerization initiator to the emulsified solution.

The polyester-based monomer may preferably be a polyethylene terephthalate (PET) monomer, and the polyester-based monomer may preferably have a molecular weight of approximately 1,000 to approximately 100,000 and preferably a glass transition temperature of approximately 40°C to approximately 80°C.

The organic solvent may preferably be one of methylene chloride, ethyl acetate, and a mixture thereof.

The vinyl-based monomer may preferably be selected from the group consisting of a styrene monomer, an acrylate monomer, and a methacrylate monomer.

The macromonomer may preferably be an amphiphilic molecule and may preferably be selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester.

A content of the polyester-based monomer may preferably be approximately 0.1 to approximately 50% by weight based on the weight of the vinyl-based monomer.

The hydrophilic polymerization initiator may preferably be potassium persulfate.

The foregoing and/or other aspects and utilities of the present general inventive concept are also achieved by providing a method of preparing a toner composition, the method including preparing a monomer solution by dissolving a polyester-based monomer in an organic solvent and adding a vinyl-based monomer thereto, preparing an aqueous macromonomer solution by dissolving a macromonomer in water, mixing the monomer solution and the aqueous macromonomer solution, polymerizing the monomers by adding a hydrophilic polymerization initiator to the mixed solution, and adding a wax, a colorant, an emulsifier, and a flocculant to the polymerized latex composition.

Thus, in a second aspect of the present invention there is provided a method of preparing a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
mixing the monomer solution and the aqueous macromonomer solution;
polymerizing the monomers by adding a hydrophilic polymerization initiator to the mixed solution; and
adding a wax, a colorant, an emulsifier, and a flocculant to the polymerized latex composition.

The polyester-based monomer may preferably be a polyethylene terephthalate (PET) monomer.

The polyester-based monomer may preferably have a molecular weight of approximately 1,000 to approximately 100,000 and preferably a glass transition temperature of approximately 40°C to approximately 80°C.

The organic solvent may preferably be one of methylene chloride, ethyl acetate, and a mixture thereof.

The vinyl-based monomer may preferably be selected from the group consisting of a styrene monomer, an acrylate monomer, and a methacrylate monomer.

The macromonomer may preferably be an amphiphilic molecule.

The macromonomer may preferably be selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester.

A content of the polyester-based monomer may preferably be approximately 0.1 % to approximately 50% by weight based on the weight of the vinyl-based monomer.

The hydrophilic polymerization initiator may preferably be potassium persulfate.

The colorant may preferably be mixed with the macromonomer, and the mixture may be dispersed and added to the latex.

The emulsifier may preferably be a macromonomer, and the flocculant may preferably be magnesium chloride.

The foregoing and/or other aspects and utilities of the present general inventive concept are also achieved by providing a method of preparing a latex for a toner composition, the method including dissolving a polyester-based monomer in an organic solvent, adding a vinyl-based monomer to the dissolved polyester-based monomer, dissolving a macromonomer to prepare a macromonomer solution, and emulsifying the polyester-based monomer and vinyl-based monomer solution by mixing with the macromonomer solution, wherein the method does not comprise a separate emulsifier washing process.

Thus, in a third aspect of the present invention there is provided a method of preparing a latex for a toner composition, the method comprising:
dissolving a polyester-based monomer in an organic solvent;
adding a vinyl-based monomer to the dissolved polyester-based monomer;
dissolving a macromonomer to prepare a macromonomer solution; and
emulsifying the polyester-based monomer and vinyl-based monomer solution by mixing with the macromonomer solution,
wherein the method does not comprise a separate emulsifier washing process.

The method may preferably further include polymerizing the monomers by adding a hydrophilic polymerization initiator to the emulsified solution.

Where applicable, features and embodiments of any aspects of the present invention, as described herein, may be regarded as preferred features and embodiments of any of the other aspects of the present invention.

Reference will now be made in detail to the embodiments of the present general inventive concept. The embodiments are described below in order to explain the present general inventive concept. The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

According to an exemplary embodiment of the present general inventive concept, a method of preparing a latex for a toner composition may include preparing a monomer solution by dissolving a polyester-based monomer in an organic solvent and adding a vinyl-based monomer thereto, preparing an aqueous macromonomer solution by dissolving a macromonomer in water, preparing a solution in which the monomers and macromonomer are emulsified by mixing the monomer solution and the aqueous macromonomer solution, and polymerizing the monomers by adding a hydrophilic polymerization initiator to the emulsified solution.

In the method of preparing a latex for a toner composition according to the above exemplary embodiment, the polyester-based monomer is first dissolved in the organic solvent.

Any polyester-based monomer usable in polymerization may be used as the polyester-based monomer usable in the above exemplary embodiment. For example, a polyester-based resin may be used as the polyester-based monomer. For this, a propylene oxide adduct of bisphenol A and an ethylene oxide adduct of bisphenol A, which are used as an alcohol component, and a terephthalic acid, a trimellitic anhydride, a fumaric acid, or a succinic acid derivative, which are used as an acid component, can be polymerized to obtain the polyester-based resin.

Among polyester-based monomers, a polyethylene terephthalate (PET) monomer may be used in the above exemplary embodiment. The PET monomer may have a molecular weight of approximately 1,000 to approximately 100,000 and a glass transition temperature of approximately 40°C to approximately 80°C.

As the organic solvent usable in the above exemplary embodiment of the present general inventive concept, any organic solvent which is capable of dissolving the polyester-based monomer, such as, the PET monomer, may be used. The organic solvent may be, for example, one of methylene chloride, ethyl acetate, and a mixture thereof. Methylene chloride may also be used as the organic solvent.

The polyester-based monomer is dissolved in the organic solvent, the vinyl-based monomer is then added thereto, and the monomers are mixed together.

A monomer which is capable of being polymerized and has a vinyl group may be used as the vinyl-based monomer. The vinyl-based monomer may be selected from the group consisting of a styrene monomer, an acrylate monomer, and a methacrylate monomer.

A content of the polyester-based monomer dissolved in the organic solvent may be approximately 0.1 % to approximately 50% by weight based on the weight of the vinyl-based monomer.

If a toner particle is prepared in a form of hybrid by polymerizing the polyester-based monomer together with the vinyl-based monomer as described above, the toner particle exhibits a high gloss and a high particle uniformity which are advantages of the polyester-based monomer. Additionally, the composition of the vinyl-based monomer, particularly, a styrene-acryl-based resin is changed, and thus, a fixing temperature and a toner structure can be controlled. In other words, when the polyester-based monomer and the vinyl-based monomer are used according to the above exemplary embodiment, the benefits of each can be simultaneously implemented in the toner.

After the polyester-based monomer and the vinyl-based monomer are dissolved in the organic solvent, a macromonomer is dissolved in water separately from the dissolution of the monomers, and an aqueous macromonomer solution is then prepared.

The macromonomer has amphiphilic (hydrophobic/hydrophilic) properties, and may include a polymer or an oligomer which has a polymerizable functional group at one terminal end. A hydrophilic portion which is chemically bonded to a particle surface of the macromonomer enables excellent long-term stability of particles to be obtained by steric stabilization. Additionally, the hydrophilic portion can control a particle size of a toner latex according to the amount or molecular weight of the macromonomer to be inserted.

In addition, the macromonomer can be used as a monomer to be polymerized during latex polymerization.

Furthermore, the macromonomer serves as an emulsifier used in emulsion polymerization. Accordingly, in the method of preparing a latex, the monomer can be emulsified using the macromonomer instead of the emulsifier, for example, a surfactant which is mainly used as an emulsifier.

Therefore, a conventional emulsifier washing process can be simplified. If the surfactant is used as the emulsifier, a large amount of wastewater can be generated by removing the surfactant, and the wastewater thus generated may have a negative effect on the environment. Accordingly, a process required for removing the emulsifier is simplified to reduce a manufacturing cost of the toner and the amount of wastewater to be discharged, so that a toner can be prepared using an environmentally friendly preparation method. Additionally, problems caused by the emulsifier, such as sensitivity to humidity, low frictional electrification, decrease in dielectric constant, toner aging, and a decrease in toner flexibility, can be removed, and toner storage can be improved.

The macromonomer usable in the above exemplary embodiment may be a compound in which a chain of a compound, such as polyethylene oxide or polyethylene glycol (PEG), is modified or a vinyl group is introduced. Examples of the macromonomer may include polyethylene glycol-methacrylate, polyethylene glycol-ethyl ether methacrylate, polyethylene glycol-dimethacrylate, polyethylene glycol-modified urethane, and polyethylene glycol-modified polyester.

After the aqueous macromonomer solution is prepared, a monomer solution in which the polyester-based monomer and vinyl-based monomer are dispersed is mixed with the aqueous macromonomer solution, to obtain a solution in which the monomers are emulsified in the aqueous macromonomer solution.

In order to initiate monomer polymerization, a hydrophilic polymerization initiator is added to the emulsified solution. Any material capable of initiating polymerization in an aqueous solution may be used as the hydrophilic polymerization initiator, for example, potassium persulfate may be used.

According to another exemplary embodiment of the present general inventive concept, a method of preparing a toner composition may include preparing a latex according to the method of preparing a latex for a toner composition as described above, and adding a wax, a colorant, an emulsifier, and a flocculant to the polymerized latex composition.

The wax is used as a release agent in order to prevent toner offset. Examples of the wax usable in this exemplary embodiment may include polyethylene, polypropylene, ester, a carnauba wax, or the like. However, the present general inventive concept is not necessarily limited thereto, and other suitable waxes may be used.

Colorants embody the colors of toner particles and can be divided into dye-based colorants and pigment-based colorants. Generally, any colorant which is widely used may be used as the colorant of this exemplary embodiment. For example, a pigment-based colorant, which has excellent thermal stability and light resistance, can be used as the colorant.

Examples of pigment-based colorants usable in the toner composition according to this exemplary embodiment, may include azo-based pigments, phthalocyanine-based pigments, basic dye-based pigments, quinacridone-based pigments, dioxazine-based pigments, condensed azo-based pigments, chromates, ferrocyanides, oxides, sulfides, selenides, sulfates, silicates, carbonates, phosphates, metal powder, and carbon black, but the present general inventive concept is not necessarily limited thereto.

Since the pigment-based colorant is generally insoluble in water, the pigment-based colorant has low solubility in the prepared soluble latex solution. Accordingly, an additive may be needed to dissolve the colorant, and thus the colorant can be mixed with the macromonomer as an emulsifier in order to disperse the colorant, the mixture may be dispersed and added to the latex.

The flocculant is used to flocculate emulsified particles, and magnesium chloride may be used as the flocculant.

Additionally, an external additive, such as silica, can be added to the dried toner particles to control the charge amount and other properties. Finally, a dry toner is prepared.

### EXAMPLE

Hereinafter, in Example 1, a toner composition is prepared using a macromonomer instead of an emulsifier when preparing an emulsion polymerized toner using a polyester-based monomer and a vinyl-based monomer according to an exemplary embodiment of the present general inventive concept. In Examples 2 to 4, toner compositions are prepared using a macromonomer as an emulsifier when preparing an emulsion polymerized toner using a latex. It will be apparent to those skilled in the art that the description of the exemplary embodiments of the present general inventive concept is intended to be illustrative of the preparation of a latex for a toner composition and a toner composition, but does not limit the preparation method performed in this manner.

### EXAMPLE 1

0.5g of polyethylene terephthalate (PET) was dissolved in 5 ml of a methylene chloride solvent, and then the obtained solution was mixed with 5g of a styrene monomer to obtain a homogeneous solution. Additionally, 0.5g of poly(ethylene glycol)-ethyl ether methacrylate (PEG-EEM, manufactured by Aldrich Chemical Co.) as a macromonomer was dissolved in 100g of distilled water to obtain a mixed solution.

The homogeneous solution and the mixed solution as prepared above were strongly agitated using ultrasonic waves to obtain a droplet in which the PET and styrene monomer were stabilized in an aqueous liquid phase. After the resulting mixture was heated to 70°C while pursing with nitrogen gas, 0.1g of potassium persulfate as a hydrophilic polymerization initiator was added thereto, and then the mixture was stirred at 350 rpm for 24 hours to obtain a hybrid latex. The polymerized latex had an average particle size of approximately 500 nm. The polymerized latex was then dried and examined by scanning electron microscope (SEM) and thermogravimetric analysis (TGA) techniques. The results indicated that the hybrid latex thus prepared had excellent thermal stability.

40g of deionized water and 25g of the obtained hybrid latex were added to a reactor, and then the mixture was stirred at 300 rpm. 30g of a black pigment solution and 3g of MgCl₂, which were dispersed by the macromonomer, were added thereto while stirring the mixture. The pH of the reaction solution was adjusted to 10, and then the solution was gradually heated to 95°C. When the toner had a volume average particle size of approximately 6 µm after the reaction solution was continuously stirred at 95°C, 4g of NaCl was dissolved in 10g of distilled water, and the solution was added thereto. Subsequently, the resulting mixture was heated for 4 hours and shaped into particles, followed by cooling and filtration to obtain toner particles.

Toner particles of a desirable size and shape were prepared, and then cooled below Tg. Next, the toner particles were filtered, separated, and dried. External additives, such as silica, were added externally to the dried toner particles to control the charge amount and other properties. By this means, a final dry toner for an electrophotographic image forming apparatus was prepared.

As described above, the monomers could be emulsified and polymerized using the macromonomer instead of an emulsifier, and accordingly, it was possible to prepare a toner composition having advantages of the PET and styrene resin without a separate emulsifier washing process.

### EXAMPLE 2

0.5g of polyethylene terephthalate (PET) was dissolved in 5 ml of a methylene chloride solvent, and then the obtained solution was mixed with 5g of a styrene monomer to obtain a homogeneous solution. Additionally, 0.25g of sodium dodecyl sulfate (SDS) as an emulsifier was dissolved in 100g of distilled water to obtain a mixed solution.

The homogeneous solution and the mixed solution as prepared above were strongly agitated using ultrasonic waves to obtain a droplet in which the PET and styrene monomer were stabilized in an aqueous liquid phase. After the resulting mixture was heated to 70°C while pursing with nitrogen gas, 0.1g of potassium persulfate as a hydrophilic polymerization initiator was added thereto, and then the mixture was stirred at 350 rpm for 24 hours to obtain a hybrid latex. The polymerized latex had an average particle size of approximately 300 nm. The polymerized latex was then dried and examined by scanning electron microscope (SEM) and thermogravimetric analysis (TGA) techniques. The results indicated that the hybrid latex thus prepared had excellent thermal stability.

40g of deionized water and 25g of the obtained hybrid latex were added to a reactor, and then the mixture was stirred at 300 rpm. 30g of a black pigment solution and 3g of MgCl₂, which were dispersed by the macromonomer, were added thereto while stirring the mixture. The pH of the reaction solution was adjusted to 10, and then the solution was gradually heated to 95°C. When the toner had a volume average particle size of approximately 6 µm after the reaction solution was continuously stirred at 95°C, 4g of NaCl was dissolved in 10g of distilled water, and the solution was added thereto. Subsequently, the resulting mixture was heated for 4 hours and shaped into particles, followed by cooling and filtration to obtain toner particles.

Toner particles of a desirable size and shape were prepared, and then cooled below Tg. Next, the toner particles were filtered, separated, and dried. External additives, such as silica, were added externally to the dried toner particles to control the charge amount and other properties. By this means, a final dry toner for an electrophotographic image forming apparatus was prepared.

When preparing a latex as described above, a macromonomer was used instead of an emulsifier, such as a surfactant, in order to dissolve the water-insoluble colorant in the water-soluble latex, and accordingly, it was possible to prepare a toner composition having advantages of the PET and styrene resin without a separate emulsifier washing process.

### EXAMPLE 3

0.5g of polyethylene terephthalate (PET) was dissolved in 5 ml of a methylene chloride solvent, and then the obtained solution was mixed with 5g of a styrene monomer to obtain a homogeneous solution. Additionally, 0.8g of sodium dodecyl sulfate (SDS) as an emulsifier was dissolved in 200g of distilled water to obtain a mixed solution.

The homogeneous solution and the mixed solution as prepared above were strongly agitated using ultrasonic waves to obtain a droplet in which the PET and styrene monomer were stabilized in an aqueous liquid phase. After the resulting mixture was heated to 70°C while pursing with nitrogen gas, 0.1g of potassium persulfate as a hydrophilic polymerization initiator was added thereto, and then the mixture was stirred at 350 rpm for 24 hours to obtain a hybrid latex. The polymerized latex had an average particle size of approximately 80 nm. The polymerized latex was then dried and examined by scanning electron microscope (SEM) and thermogravimetric analysis (TGA) techniques. The results indicated that the hybrid latex thus prepared had excellent thermal stability.

40g of deionized water and 25g of the obtained hybrid latex were added to a reactor, and then the mixture was stirred at 300 rpm. 30g of a black pigment solution and 3g of MgCl₂, which were dispersed by the macromonomer, were added thereto while stirring the mixture. The pH of the reaction solution was adjusted to 10, and then the solution was gradually heated to 95°C. When the toner had a volume average particle size of approximately 6 µm after the reaction solution was continuously stirred at 95°C, 4g of NaCl was dissolved in 10g of distilled water, and the solution was added thereto. Subsequently, the resulting mixture was heated for 4 hours and shaped into particles, followed by cooling and filtration to obtain toner particles.

Toner particles of a desirable size and shape were prepared, and then cooled below Tg. Next, the toner particles were filtered, separated, and dried. External additives, such as silica, were added externally to the dried toner particles to control the charge amount and other properties. By this means, a final dry toner for an electrophotographic image forming apparatus was prepared.

When preparing a latex as described above a macromonomer was used instead of an emulsifier, such as a surfactant, in order to dissolve the water-insoluble colorant in the water-soluble latex, and accordingly, it was possible to prepare a toner composition having advantages of the PET and styrene resin without a separate emulsifier washing process.

### EXAMPLE 4

A toner composition was prepared in the same manner as in Example 3, except that a mixture of a styrene monomer, an n-butyl acrylate monomer, and a methacrylic acid monomer (the total weight of the mixture was 10g, and the weight ratio was 7 : 2 : 1 to 6.5 : 3.0 : 0.5, respectively) was used instead of the styrene monomer. In the flocculation reaction, the toner had a volume average particle size of approximately 7 µm and was shaped into particles, followed by cooling and filtration to obtain toner particles.

When preparing a latex as described above, a macromonomer was used instead of an emulsifier, such as a surfactant, in order to dissolve the water-insoluble colorant in the water-soluble latex, and accordingly, it was possible to prepare a toner composition having advantages of the PET and styrene resin without a separate emulsifier washing process.

As described above, according to exemplary embodiments of the present general inventive concept, the latex for a toner composition having advantages of polyester-based and vinyl-based monomers can be prepared without using an emulsifier. Therefore, it is not necessary to wash the emulsifier, and thus there is no decrease in toner performance due to the remaining emulsifier. Accordingly, the latex for a toner composition and the toner composition prepared using the latex can be prepared using simpler and more environmentally friendly processes.

Additionally, according to the present general inventive concept, it is possible to obtain a toner composition which exhibits a high gloss, an excellent durability, a low-temperature fixing property, and a controllability of a structure of toner.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of preparing a latex for a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
preparing a solution in which the monomers and macromonomer are emulsified by mixing the monomer solution and the aqueous macromonomer solution; and
polymerizing the monomers by adding a hydrophilic polymerization initiator to the emulsified solution.

2. The method as claimed in claim 1, wherein the polyester-based monomer is a polyethylene terephthalate (PET) monomer.

3. The method as claimed in either of claims 1 and 2, wherein the polyester-based monomer has a molecular weight of approximately 1,000 to approximately 100,000 and a glass transition temperature of approximately 40°C to approximately 80°C.

4. The method as claimed in any preceding claim, wherein the organic solvent is one of methylene chloride, ethyl acetate, and a mixture thereof.

5. The method as claimed in any preceding claim, wherein the vinyl-based monomer is selected from the group consisting of a styrene monomer, an acrylate monomer, and a methacrylate monomer.

6. The method as claimed in any preceding claim, wherein the macromonomer is an amphiphilic molecule.

7. The method as claimed in any preceding claim, wherein the macromonomer is selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester.

8. The method as claimed in any preceding claim, wherein the hydrophilic polymerization initiator is potassium persulfate.

9. The method as claimed in any preceding claim, wherein a content of the polyester-based monomer is approximately 0.1 to approximately 50% by weight based on the weight of the vinyl-based monomer.

10. A method of preparing a toner composition, the method comprising:
preparing a monomer solution by dissolving a polyester-based monomer in an organic solvent and adding a vinyl-based monomer thereto;
preparing an aqueous macromonomer solution by dissolving a macromonomer in water;
mixing the monomer solution and the aqueous macromonomer solution;
polymerizing the monomers by adding a hydrophilic polymerization initiator to the mixed solution; and
adding a wax, a colorant, an emulsifier, and a flocculant to the polymerized latex composition.

11. The method as claimed in claim 10, wherein the polyester-based monomer is a polyethylene terephthalate (PET) monomer.

12. The method as claimed in either of claims 10 and 11, wherein the polyethylene terephthalate (PET) monomer has a molecular weight of approximately 1,000 to approximately 100,000 and a glass transition temperature of approximately 40°C to approximately 80°C.

13. The method as claimed in any of claims 10 to 12, wherein the organic solvent is one of methylene chloride, ethyl acetate, and a mixture thereof.

14. The method as claimed in any of claims 10 to 13, wherein the vinyl-based monomer is selected from the group consisting of a styrene monomer, an acrylate monomer, and a methacrylate monomer.

15. The method as claimed in any of claims 10 to 14, wherein the macromonomer is an amphiphilic molecule.

16. The method as claimed in any of claims 10 to 15, wherein the macromonomer is selected from the group consisting of polyethylene glycol-methacrylate, polyethylene glycol-ethyl ether methacrylate, polyethylene glycol-dimethacrylate, polyethylene glycol-modified urethane, and polyethylene glycol-modified polyester.

17. The method as claimed in any of claims 10 to 16, wherein the hydrophilic polymerization initiator is potassium persulfate.

18. The method as claimed in any of claims 10 to 17, wherein a content of the polyester-based monomer is approximately 0.1 to approximately 50% by weight based on the weight of the vinyl-based monomer.

19. The method as claimed in any of claims 10 to 18, wherein the colorant is mixed with the macromonomer, and the mixture is dispersed and added to the latex.

20. The method as claimed in any of claims 10 to 19, wherein the emulsifier is a macromonomer.

21. The method as claimed in any of claims 10 to 20, wherein the flocculant is magnesium chloride.

22. A method of preparing a latex for a toner composition, the method comprising:
dissolving a polyester-based monomer in an organic solvent;
adding a vinyl-based monomer to the dissolved polyester-based monomer;
dissolving a macromonomer to prepare a macromonomer solution; and
emulsifying the polyester-based monomer and vinyl-based monomer solution by mixing with the macromonomer solution,
wherein the method does not comprise a separate emulsifier washing process.

23. The method of claim 22, further comprising:
polymerizing the monomers by adding a hydrophilic polymerization initiator to the emulsified solution.
